Europäisches Patentamt

European Patent Office

Office européen des brevets

(19)

(11) Veröffentlichungsnummer: **0 207 057**
**A2**

(12) **EUROPÄISCHE PATENTANMELDUNG**

(21) Anmeldenummer: **86890148.9**

(22) Anmeldetag: **21.05.86**

(51) Int. Cl.⁴: **H01M 2/40** , **H01M 10/42** , **H01M 10/36**

(30) Priorität: **23.05.85 AT 1561/85**

(43) Veröffentlichungstag der Anmeldung:
**30.12.86 Patentblatt 86/52**

(84) Benannte Vertragsstaaten:
**BE CH DE FR GB IT LI LU NL SE**

(71) Anmelder: **S.E.A. Studiengesellschaft für Energiespeicher und Antriebssysteme Gesellschaft m.b.H.
Bleckmanngasse 10
A-8680 Mürzzuschlag(AT)**

(72) Erfinder: **Tomazic, Gerd, Dr,
Hofkirchergasse 4
A-8680 Mürzzuschlag(AT)**

(74) Vertreter: **Widtmann, Georg, Dr.
S.E.A. Studiengesellschaft für
Energiespeicher und Antriebssysteme
Gesellschaft m.b.H. Schellinggasse 7/5
A-1010 Wien(AT)**

(54) **Galvanisches Element, gegebenenfalls Zink-Brom-Batterie.**

(57) Die Erfindung betrifft ein galvanisches Element, gegebenenfalls Zink-Brom-Batterie, mit zumindest teilweise in Serie geschalteten bipolaren Elektroden, insbesondere mit kunststoffgebundenem Kohlenstoff, wobei die Kathoden-und die Anodenräume über Elektrolytflüssigkeit innerhalb einer Serie jeweils zumindest teilweise untereinander in den Elektrolytzuleitungen (8) und vorzugsweise ebenfalls in den Elektrolytableitungen (8) elektrisch leitend verbunden sind, und die Leitungen, insbesondere Zuleitungen, vorzugsweise zu den Kathodenräumen, zumindest teilweise über elektrische Widerstände (14) unterschiedlicher Größe verbunden sind, wobei in den Elektrolytzu-und gegebenenfalls -ableitungen (8) in/aus den Kathoden-und/oder Anodenräumen Hilfselektroden (13) angeordnet sind, die über einzelne Widerstände (14) mit zumindest teilweise unterschiedlichen Widerständen verbunden sind, wobei vorzugsweise die Hilfselektroden (13) über die Widerstände (14) in Serie geschaltet sind, und gegebenenfalls die Hilfselektroden (13), welche in der ersten bzw. letzten Elektrolytzu-und/oder -ableitung einer Serie aus dem Anoden-bzw. Kathodenraum jeweils über einen Leiter erster Ordnung mit der entsprechenden Elektrode, z.B. den jeweiligen Polen, elektrisch leitend verbunden sind.

Fig. 3

## Galvanisches Element, gegebenenfalls Zink-Brom-Batterie

Die Erfindung bezieht sich auf ein galvanisches Element, gegebenenfalls Zink-Brom-Batterie, mit zumindest teilweise in Serie geschalteten bipolaren Elektroden.

In der europäischen Patentanmeldung 84 89 02 49.0 wird eine Zink-Brom-Batterie beschrieben, die im Prinzip aus drei Hauptkomponenten besteht. Der zentrale Teil wird durch das eigentliche galvanische Element gebildet, das aus einer Vielzahl miteinander flüssigkeitsdicht verbundener Elektroden und Separatoren besteht. Die Elektroden sind in bipolarer Anordnung vorgesehen und bestehen im wesentlichen aus kunststoffgebundenem Kohlenstoff mit einem diesen umgebenden Rahmen aus einem thermoplastischen Material. Durch die bipolare Anordnung wirkt eine Seite der Elektrode als positiver Pol (Brom-Elektrode) und die andere Seite als negativer Pol (Zink-Elektrode). Durch die relativ dünne Ausbildung des Separators kann der elektrische Widerstand besonders gering gehalten werden, wobei gleichzeitig der Separator als Diaphragma wirkt, d.h. als wirksame Barriere gegen den unerwünschten Transport von Brom an die Zinkelektrode und umgekehrt. Der zweite wesentliche Bestandteil des galvanischen Elementes ist der Elektrolyt, der mit einer wäßrigen Zink-Bromid-Lösung und einem organischen Komplexbildner zur Bindung des elementaren Broms aufgebaut ist. Der Elektrolyt zirkuliert in zwei voneinander getrennten Kreisläufen durch das galvanische Element. Zur Zirkulation des Elektrolyten ist ein weiterer Bestandteil des galvanischen Elementes vorgesehen und zwar sind dies die Pumpen sowie die Vorratsbehälter für den Elektrolyten.

Während der Ladung reagiert das entstehende Brom unter Bildung eines organischen Bromkomplexes, der als zweite flüssige Phase die Speicherung des Broms bewirkt. Infolge der höheren spezifischen Dichte trennt sich diese bromreiche Phase im Reservoir für die Kathodenflüssigkeit von der übrigen Lösung. Im geladenen Zustand wird daher der Reaktionspartner für die positive Elektrode außerhalb der elektrochemischen Zelle aufbewahrt, und kann in keine Reaktion mit dem Zink treten. Verluste durch Selbstentladung werden daher ausgeschaltet, die Batterie kann beliebig lange wartungsfrei gelagert werden. (Die Anodenflüssigkeit verarmt während der Ladung an Zink, das in metallischer Form an der negativen Elektrode abgeschieden wird).

Während der Entladung wird die bromreiche organische Phase der passivierten Elektrode mit dem umgewälzten Elektrolyten zugeführt, während an der negativen Elektrode Zink in den Elektrolyten in Lösung geht. Als weiteres systemimmanentes Charakteristikum können die durch die bipolare Elektrodenanordnung in Serie bedingten Leck-oder parasitären Ströme gelten, die infolge der zu den einzelnen Zellen parallelen, über eine gemeinsame Hauptleitung erfolgenden Elektrolytzuführung auftreten und zu Energieverlusten und ungleichmäßiger Zinkabscheidung (Dendritenbildung) führen. Dieser Effekt nimmt mit steigender Zahl der Einzelzellen zu, und wirkt sich hinsichtlich einer Zinkakkumulation am stärksten bei den Elektrolytzuführungen in der Nähe des negativen Endpols des bipolaren Zellblockes aus. Die normale Elektrolytzirkulation wird gestört, die Zinkabscheidung in den einzelnen Zellen wird uneinheitlich, so daß - schließlich deren voneinander abweichendes Verhalten Funktionsuntüchtigkeit der Batterie verursachen kann.

Als wirksamste Maßnahme gegen die ungleichen parasitären Ströme und gegen das Zinkwachstum in die Elektrolytkanäle hat sich eine elektrische Schaltung bewährt, gemäß US-A 41 97 169, bei welcher im Bereich der Kanäle der Elektrolytzu-und -abführung mittels eines die Elektrolytkanäle untereinander verbindenden Querkanals eine der der Batteriespannung entsprechende Spannung angelegt wird. Die Spannungsgleichheit zwischen Elektrode und Querkanal verhindert das Fließen eines Stromes in diesem Bereich. Dieser Leckstromschutz erfordert nur geringen Energieaufwand, der direkt von der Batterieleistung abgezweigt wird.

Durch diesen Querkanal, welcher die einzelnen Leitungen verbindet, kann ein Stoffaustausch erfolgen, welcher gegebenenfalls unerwünscht ist, wobei gleichzeitig ein relativ komplizierter Aufbau bedingt ist, der gegebenenfalls einen erhöhten Strömungswiderstand verursacht, wodurch ein erhöhter Energieaufwand über die Pumpen erforderlich sein kann.

Die vorliegende Erfindung hat sich zum Ziel gesetzt, ein galvanisches Element zu schaffen, bei dem ein derartiger Leckstromschutz mit geringstem Energieaufwand durchgeführt werden kann, wobei gleichzeitig eine besonders einfache konstruktive Ausgestaltung mit geringem Strömungswiderstand und dgl. angestrebt wird.

Das erfindungsgemäße galvanische Element, gegebenenfalls Zink-Brom-Batterie, mit zumindest teilweise in Serie geschalteten bipolaren Elektroden, insbesondere mit kunststoffgebundenem Kohlenstoff, wobei die Kathoden-und die Anodenräume über Elektrolytflüssigkeit innerhalb einer Serie jeweils zumindest teilweise untereinander in den Elektrolytzuleitungen und vorzugsweise ebenfalls in den Elektrolytableitungen elektrisch leitend verbunden sind, und die Leitungen, insbesondere Zuleitungen, vorzugsweise zu den Kathodenräumen zumindest teilweise über elektrische Widerstände unterschiedlicher Größe verbunden sind, besteht im wesentlichen darin, daß in den Elektrolytzu-und gegebenenfalls -ableitungen in/aus den Kathoden-und/oder Anodenräumen Hilfselektroden angeordnet sind, die über einzelne Widerstände mit zumindest teilweise unterschiedlichen Widerständen verbunden sind, wobei vorzugsweise die Hilfselektroden über die Widerstände in Serie geschaltet sind, und gegebenenfalls die Hilfselektroden, welche in der ersten bzw. letzten Elektrolytzu-und/oder -ableitung einer Serie aus dem Anoden-bzw. Kathodenraum jeweils über einen Leiter erster Ordnung mit der entsprechenden Elektrode, z.B. den jeweiligen Polen elektrisch leitend verbunden sind. Dadurch, daß in den einzelnen Elektrolytleitungen Hilfselektroden vorgesehen sind, können Widerstände beliebiger Art, also beispielsweise Nichtleiter zweiter Ordnung verwendet werden, wodurch der Stromverbrauch wesentlich verringert werden kann. Weiters kann ein besonders einfacher Anschluß, beispielsweise an den Minus-bzw. Pluspol der Batterie bewerkstelligt werden. Von besonderem Vorteil ist auch, daß die Widerstände besonders genau eingestelllt werden können, wobei beispielsweise eine Temperaturabhängigkeit vollauf vermeidbar ist.

Gemäß einem weiteren Merkmal der vorliegenden Erfindung sind die Widerstände, z.B. Fotowiderstände in ihren Widerstandswerten veränderlich. Diese Veränderlichkeit des Widerstandes kann, beispielsweise durch Einwirkung von Licht, um ein Ein-und Ausschalten der Stromschutzschaltung zu bedingen, oder auch durch Mikroprozessoren über ein entsprechendes Programm od. dgl. erfolgen.

Sind die Hilfselektroden ringförmig und bilden sie einen Teil der Elektrolytleitung, so ist dadurch ein besonders geringer Strömungswiderstand gewährleistet, wobei gleichzeitig eine große Oberfläche der Hilfselektrode gegenüber dem Elektrolyten erreichbar ist.

Ist die Hilfselektrode mit Kohlenstoff, insbesondere Ruß, aufgebaut, so liegt eine besonders gute Kombination der elektrischen und chemischen Eigenschaften vor.

Gemäß einem weiteren Merkmal der vorliegenden Erfindung sind die Hilfselektroden mit einem kunststoffgebundenen Leiter erster Ordnung aufgebaut, wodurch eine besonders leichte Formgebung der Hilfselektroden erfolgen kann, wobei auch ein Einbau der Hilfselektroden in die Elektrolytleitungen, die beispielsweise aus Polypropylen bestehen, besonders einfach durchgeführt werden kann.

Sind mehrere Hilfselektroden in einem Teil, vorzugsweise einstückig vorgesehen, so kann eine besonders einfache Fertigung eines entsprechenden galvanischen Elementes durchgeführt werden, da es lediglich erforderlich ist, einen Teil zu handhaben, um eine hohe Anzahl von Hilfselektroden vorzusehen.

Eine besonders einfache Ausführungsform ergibt sich dann, wenn sowohl die Hilfselektroden als auch die Widerstände aus demselben Material, insbesondere kunststoffgebundenem Kohlenstoff, z.B. Ruß, aufgebaut sind, da dann eine besonders gute Anpassung an die übrigen Materialeigenschaften des galvanischen Elementes erreichbar ist. Sind die Hilfselektroden und die Widerstände in einem Teil, vorzugsweise einstückig, vereint, wobei vorzugsweise die elektrischen Größen der Widerstände durch unterschiedliche Querschnitte gegeben sind, und gegebenenfalls an gegenüberliegenden Enden einen Anschluß, z.B. mit Kupfer, Silber, od. dgl., aufweisen, so ist eine besonders vorteilhafte und einfach zu handhabende Konstruktionseinheit gegeben, die eine besonders einfache und sichere Fertigung erlaubt.

Weisen die Hilfselektroden gleichen Abstand von den ihnen jeweils zugeordneten Elektrodenräumen auf, so wird ein besonders geringer Raum für die Schutzschaltung erforderlich sein.

Weisen die Hilfselektroden gleichen Abstand von den ihnen jeweils zugeordneten Elektrodenräumen auf, so wird ein besonders geringer Raum für die Schutzschaltung erforderlich sein.

Sind die Hilfselektroden, gegebenenfalls mit Widerständen, jeweils in einem, gegebenenfalls lösbar mit dem galvanischen Element verbundenen Anschlußstück, z.B. für die Zuleitungen oder Ableitungen in/aus den/dem Anoden-oder Kathodenraum, angeordnet, so kann ein besonders leichter Austausch vorgenommen werden, wobei auch Störungen im Strömungsverlauf beispielsweise durch mit der Zeit auftretende Verunreinigungen od. dgl., Ablagerungen von isolierenden Schichten auf den Elektroden besonders einfach entgegengewirkt werden kann.

Im folgenden wird die Erfindung anhand der Zeichnungen näher erläutert.

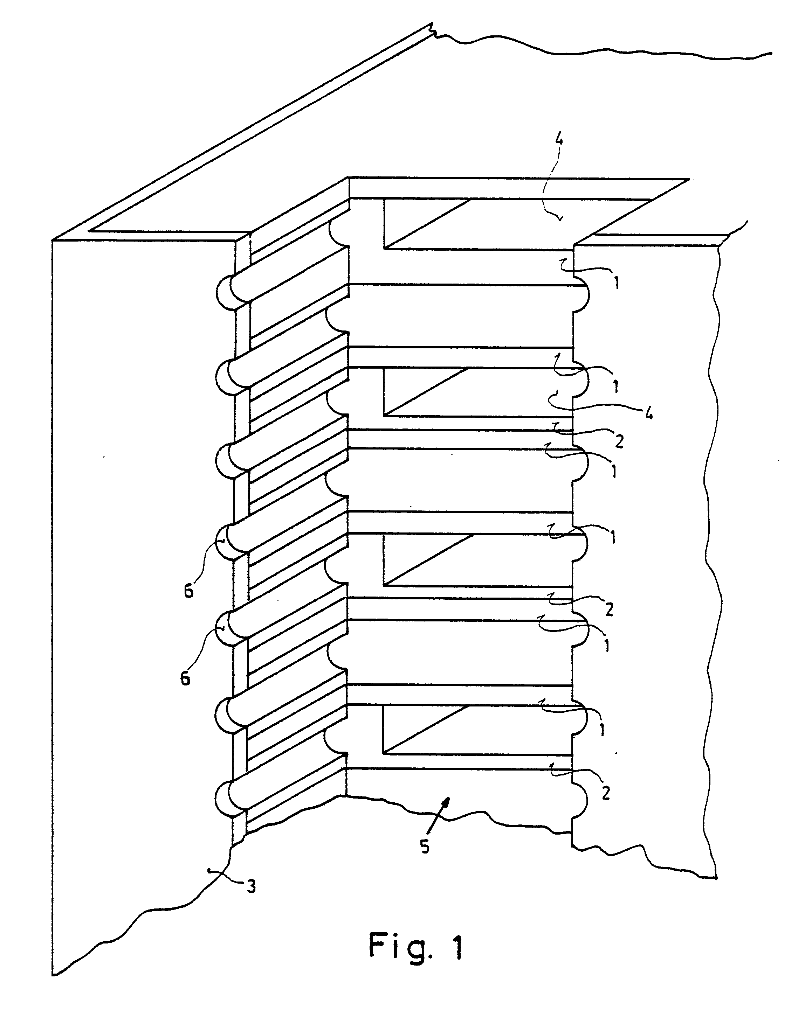

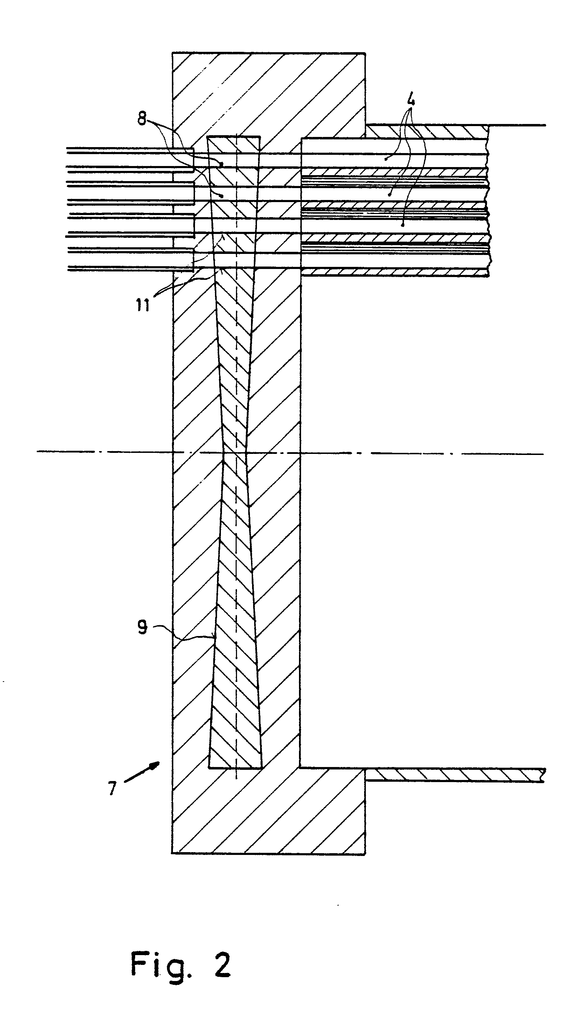

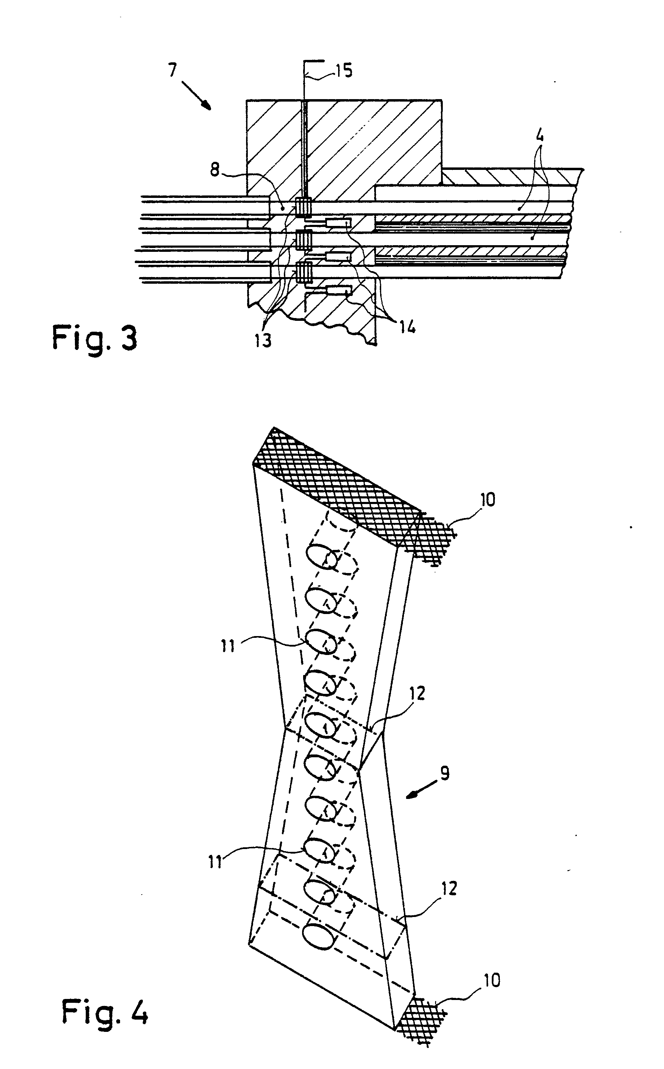

Es zeigen Fig. 1 einen Ausschnitt aus einer Batterie, Fig. 2 und 3 einen Schnitt durch ein Verbindungsstück und Fig. 4 einen Einbauteil für das Verbindungsstück gemäß Fig. 2.

In Fig. 1 ist ein galvanisches Element abschnittsweise dargestellt, das aus einzelnen Elektroden 1 und Separatoren 2 aufgebaut ist. Die Elektroden und Separatoren weisen eine gemeinsame Umhüllung 3 auf, die durch Aufschmelzen des Elektroden-und Separatorenmaterials gebildet wurde.

Das Bündel aus Elektroden und Separatoren weist Öffnungen der Verteilerkanäle 4 auf, die die Separatoren im wesentlichen quer zu ihrer flächigen Erstreckung durchsetzen. Im galvanischen Element ist eine prismatische Ausnehmung 5 vorgesehen, die Nuten 6 aufweist. In diese prismatische Ausnehmung kann gemäß Fig. 2 und 3 ein Verbindungsstück 7, das den Nuten 6 entsprechende Federn aufweist, flüssigkeitsdicht eingeschoben werden. Es kann, wie aus Fig. 1 ersichtlich, das Verbindungsstück, von welchem je nach Konstruktion (Zu-und Ableitung in/aus den Anoden- und Kathodenräumen) zumindest vier oder zumindest zwei vorgesehen sein können, lediglich zur Verbindung jedes zweiten Elektrolytraumes ausgebildet sein, wobei dann durch dieses Verbindungsstück entweder die Zuleitung oder die Ableitung des Elektrolyten aus dem Anoden-oder Kathodenraum erfolgt. Jeder Verteilerkanal 4 ist (im Fall der Zeichnung) einem Kathodenraum und einer Elektrolytzu-bzw. -ableitungsleitung 8 zugeordnet, welche mit einem Reservoir für den Elektrolyten und einer Pumpe flüssigkeitsdicht verbunden ist.

Im Verbindungsstück ist die aus kunststoffgebundenem Kohlenstoff aufgebaute Baueinheit gemäß Fig. 4 vorgesehen, die an ihren beiden Enden über ein Silbergitter 10, jeweils mit einem Pol der Batterie verbunden ist. Wie insbesondere aus Fig. 4 ersichtlich, weist die Baueinheit einen in der Fläche variierenden Querschnitt auf, wobei die Querschnittsfläche bis zur Mitte der Baueinheit abnimmt, und dann wieder zunimmt, wodurch der Widerstand an den jeweiligen Stellen unterschiedlich ist.

Durch die einzelnen zylindrischen Ausnehmungen in der Baueinheit 9 werden Hilfselektroden 11 gebildet, die ringförmige Gestalt aufweisen. Da die Spannung durch die beiden Silbergitter 10 angelegt wird, fließt der Strom in Längsrichtung der Baueinheit 9, sodaß die Widerstände durch die unterschiedlichen Querschnitte 12, strichpunktiert dargestellt, gegeben sind. Die Baueinheit ist, wie bereits ausgeführt, mit Kohlenstoff, z.B. Ruß, der durch Polypropylen gebunden ist, aufgebaut, wobei diese Baueinheit in eine Form eingelegt wird, in welcher dieser elektrisch leitende Teil beispielsweise von Polypropylen umspritzt wird, wodurch das Verbindungsstück 7 erhalten werden kann.

In Fig. 3 ist eine weitere Ausführungsform dargestellt, bei welcher im Verbindungsstück 7 in den Elektrolytleitungen 8 ringförmige Elektroden 13 aus Platin angeordnet sind, welche über Widerstände 14 in Serie geschalten sind. Die erste Elektrode 13 und die nicht dargestellte Elektrode am anderen Ende der Serie ist jeweils über einen Leiter 15 aus Kupfer mit jeweils einem Pol der Batterie verbunden. Die Elektroden 13 können jedoch auch direkt, gegebenenfalls über Widerstände mit den Polen der Batterie verbunden sein.

Es ist jedoch nicht Voraussetzung, daß die Hilfselektroden selbst als Flüssigkeitsleiter dienen, sondern es können die Hilfselektroden beispielsweise als stabförmige Elektroden in die jeweiligen Elektrolytleitungen reichen, und sodann über Widerstände konventioneller Bauart verbunden, also in Serie geschalten, sein. Als Elektrodenmaterial kommt hiebei jegliches Material in Frage, welches nicht von den Elektrolyten aufgelöst wird, wobei neben der technischen Seite auch die Frage der Verfügbarkeit von großer Bedeutung ist. Als Widerstände können auch solche verwendet werden, die ihre Größe verändern. So besteht die Möglichkeit, daß sogenannte Fotowiderstände verwendet werden, also Widerstände, die lediglich bei Bestrahlung mit Licht den Durchgang von Strom erlauben. Bei einer derartigen Ausführungsform besteht somit die Möglichkeit, daß der Schutzstrom erst dann zum Fließen kommt, wenn beispielsweise eine Leuchte eingeschaltet wird. Diese Leuchte kann mit einer Elektrolytpumpe verbunden sein, sodaß erst bei Inbetriebnahme der Batterie der Schutzstrom zu fließen kommt. Weiters besteht die Möglichkeit, Widerstände über Mikroprozessoren od. dgl. zu steuern, wobei die Wärme des Elektrolyten die Leitfähigkeit desselben und dergleichen zur Steuerung verwendet werden können.

Es besteht auch die Möglichkeit, daß mehrere Baueinheiten vorgesehen werden, um eine Regelung des Widerstandes zu erreichen.

Die Hilfelektroden können an einer beliebigen Stelle in den Elektrolytleitungen und nicht unbedigt im Verbindungsstück angeordnet sein.

**Ansprüche**

1. Galvanisches Element, gegebenenfalls Zink-Brom-Batterie, mit zumindest teilweise in Serie geschalten bipolaren Elektroden (1), insbesondere mit kunststoffgebundenem Kohlenstoff, wobei die Kathoden-und Anodenräume über Elektrolytflüssigkeit innerhalb einer Serie jeweils zumindest teilweise untereinander in den Elektrolytzuleitungen (8) und vorzugsweise ebenfalls in den Elektrolytableitungen (8) elektrisch leitend verbunden sind, und die Leitungen, insbesondere Zuleitungen, vorzugsweise zu den Kathodenräumen, zumindest teilweise über elektrische Widerstände (14) unterschiedlicher Größe verbunden sind, dadurch gekennzeichnet, daß in den Elektrolytzu-und gegebenenfalls -ableitungen (8) in/aus den Kathoden-und/oder Anodenräumen Hilfselektroden (11, 13) angeordnet sind, die über einzelne Widerstände - (14) mit zumindest teilweise unterschiedlichen Widerständen verbunden sind, wobei vorzugsweise die Hilfselektroden (11, 13) über die Widerstände - (14) in Serie geschaltet sind, und gegebenenfalls die Hilfselektroden (11, 13), welche in der ersten bzw. letzten Elektrolytzu-und/oder -ableitung einer Serie aus dem Anoden-bzw. Kathodenraum jeweils über einen Leiter erster Ordnung mit der entsprechenden Elektrode, z.B. den jeweiligen Polen, elektrisch leitend verbunden sind.

2. Galvanisches Element nach Anspruch 1, dadurch gekennzeichnet, daß die Hilfselektroden - (11), gegebenenfalls mit Widerständen jeweils in einem, gegebenenfalls lösbar mit dem galvanischen Element verbundenen Verbindungsstück (7), z.B. für die Zuleitungen und Ableitungen in/aus den/dem Anoden-oder Kathodenraum, angeordnet sind.

3. Galvanisches Element nach Anspruch 1 oder 2, dadurch gekennzeichnet, daß die Hilfselektroden (11) ringförmig sind, und einen Teil der Elektrolytleitung (8) bilden.

4. Galvanisches Element nach Anspruch 1, 2 oder 3, dadurch gekennzeichnet, daß die Hilfselektroden (11) mit Kohlenstoff, insbesondere Ruß, aufgebaut sind.

5. Galvanisches Element nach einem der Ansprüche 1 bis 4, dadurch gekennzeichnet, daß die Hilfselektroden mit einem kunststoffgebundenen Leiter erster Ordnung aufgebaut sind.

6. Galvanisches Element nach einem der Ansprüche 1 bis 5, dadurch gekennzeichnet, daß mehrere Hilfselektroden (11) in einem Teil einer Baueinheit (9), gegebenenfalls einstückig vorgesehen sind.

7. Galvanisches Element nach einem der Ansprüche 1 bis 6, dadurch gekennzeichnet, daß sowohl die Hilfselektroden (11) als auch die Widerstände aus demselben Material, insbesondere kunststoffgebundenem Kohlenstoff, z.B. Ruß, aufgebaut sind.

8. Galvanisches Element nach einem der Ansprüche 1 bis 7, dadurch gekennzeichnet, daß die Hilfelektroden (11) und die Widerstände in einem Teil einer Baueinheit (9) oder dgl., vorzugsweise einstückig vereint sind, wobei vorzugsweise die elektrischen Größen der Widerstände durch unterschiedliche Querschnitte (12) gegeben sind, und gegebenenfalls an gegenüberliegenden Enden einen Anschluß (10) z.B. aus Kupfer, Silber od. dgl., aufweisen.

9. Galvanisches Element nach einem der Ansprüche 1 bis 8, dadurch gekennzeichnet, daß die Hilfselektroden (11) gleichen Abstand von den ihnen jeweils zugeordneten Elektrodenräumen aufweisen.

10. Galvanisches Element nach einem der Ansprüche 1 bis 9, dadurch gekennzeichnet, daß die Wiederstände (14), z.B. Fotowiderstände, in ihren Widerstandswerten veränderlich sind.

Fig. 1

Fig. 2

Fig. 3

Fig. 4